# EUROPÄISCHE PATENTSCHRIFT

(11) **EP 0 907 980 B1**
(45) Veröffentlichungstag und Bekanntmachung des Hinweises auf die Patenterteilung: **22.03.2000**
(21) Anmeldenummer: 97932710.3
(22) Anmeldetag: 25.06.1997
(51) Int. Cl.: H01M 8/10, H01M 4/88

(54) **VERFAHREN ZUR HERSTELLUNG VON MEMBRAN-ELEKTRODENEINHEITEN (ME) FÜR POLYMER-ELEKTROLYT-MEMBRAN (PEM)-BRENNSTOFFZELLEN**
METHOD OF PRODUCING MEMBRANE ELECTRODE UNITS FOR PEM FUEL CELLS
PROCEDE DE PRODUCTION D'UNITES A MEMBRANE ET ELECTRODES POUR PILES A COMBUSTIBLE A MEMBRANE D'ELECTROLYTE POLYMERE

(30) Priorität: 26.06.1996 DE 19625614
(43) Veröffentlichungstag der Anmeldung: 14.04.1999
(73) Patentinhaber: SIEMENS AKTIENGESELLSCHAFT, 80333 München (DE)
(72) Erfinder: STARBECK, Gerhard, verstorben (DE); WAIDHAS, Manfred, D-90427 Nürnberg (DE); GRÜNE, Horst, D-91341 Röttenbach (DE); BIRKLE, Siegfried, D-91315 Höchstadt (DE)
(86) Internationale Anmeldenummer: DE9701322
(87) Internationale Veröffentlichungsnummer: WO9750142

(56) Entgegenhaltungen:
- DE-A- 2 647 108
- GB-A- 1 013 703
- GB-A- 1 224 991
- GB-A- 1 360 824
- US-A- 3 267 017
- US-A- 4 959 132
- US-A- 4 988 582
- PATENT ABSTRACTS OF JAPAN vol. 008, no. 015 (C-206), 21.Januar 1984 & JP 58 181882 A (TOYO SODA KOGYO KK), 24.Oktober 1983, & DATABASE WPI Derwent Publications Ltd., London, GB; AN 83-830599
- PATENT ABSTRACTS OF JAPAN vol. 007, no. 175 (C-179), 3.März 1983 & JP 58 083030 A (TOYO SODA KOGYO KK), 18.Mai 1983, & DATABASE WPI Derwent Publications Ltd., London, GB; AN 83-62007K
- PATENT ABSTRACTS OF JAPAN vol. 008, no. 007 (C-204), 12.Januar 1984 & JP 58 176222 A (TOYO SODA KOGYO KK), 15.Oktober 1983, & DATABASE WPI Derwent Publications Ltd., London, GB; AN 83-824032
- PATENT ABSTRACTS OF JAPAN vol. 006, no. 094 (C-105), 2.Juni 1982 & JP 57 023080 A (TOKUYAMA SODA CO LTD), 6.Februar 1982, & DATABASE WPI Derwent Publications Ltd., London, GB; AN 82-20894E
- PATENT ABSTRACTS OF JAPAN vol. 006, no. 127 (C-113), 13.Juli 1982 & JP 57 054288 A (TOKUYAMA SODA CO LTD), 31.März 1982, & DATABASE WPI Derwent Publications Ltd., London, GB; AN 82-38008E
- PATENT ABSTRACTS OF JAPAN vol. 007, no. 273 (C-198), 6.Dezember 1983 & JP 58 151466 A (CANON KK), 8.September 1983,

## Beschreibung

Verfahren zur Herstellung von Membran-Elektrodeneinheiten (ME) für Polymer-Elektrolyt-Membran (PEM) - Brennstoffzellen.

Die Erfindung betrifft ein kontinuierliches und automatisierbares Verfahren zur Herstellung von ME (Membran-Elektrodeneinheiten) für PEM-Brennstoff-zellen, das kostengünstig und für die Massenproduktion geeignet ist.

Bei den bislang bekannten Verfahren zur Herstellung von Elektroden für Brennstoffzellen (FC) wird in einem ersten Verfahrensschritt das gewünschte Elektrodenmaterial hergestellt, das in einem weiteren Verfahrensschritt auf den Elektrolyten oder auf einen Träger, wie z. B. Kohlepapier, aufgetragen wird. Die Auftragung kann durch mechanisches "Aufrakeln" oder durch Aufbringen einer Suspension ("ink" oder als Paste) auf die Membran und anschließendes Verdampfen des Lösungsmittels erfolgen.

Neben diesen Verfahren, bei denen in einer ersten Stufe das Elektrodenmaterial hergestellt und isoliert werden muß bevor es in einer zweiten Verfahrensstufe auf den Elektrolyten (Polymermembran) aufgetragen werden kann, gibt es noch Verfahren, bei denen das Elektrodenmaterial direkt auf dem Elektrolyten erzeugt wird.

Dazu gehört ein Verfahren, bei dem das Elektrodenmaterial, beispielsweise Platin, aus der Gasphase auf dem Elektrolyten abgeschieden wird. Nachteilig an diesen Verfahren ist, daß es sich aufgrund des notwendigen Evakuierungsvorganges auch schlecht für eine kontinuierliche Herstellung eignet, weil ein Membranband nicht durch ein Vakuum gezogen werden kann, ohne daß das Vakuum zusammenbricht. Zudem sind bei diesem Verfahren poröse Katalysatorschichten schwer realisierbar.

Ein anderes Verfahren ist bekannt, bei dem das Elektrodenmaterial in-situ auf der Membran erzeugt wird. H. Takenaka und E. Torikai et. al. beschreiben dies in Int. J. Hydrogen Energy 7,397(1982). Dabei wird die Membran zwischen zwei Halbzellen gespannt, so daß sie die beiden Elektrolyträume der Halbzellen voneinander trennt. Auf der einen Seite der Membran gibt man eine Salzlösung des gewünschten Elektrodenmaterials (also z. B. eine H₂PtCl₆-Lösung), auf die andere Seite ein geeignetes Reduktionsmittel. Das Reduktionmittel diffundiert zur Seite der Pt-haltigen Lösung. Dabei führt das Zusammentreffen des Reduktionsmittels mit dem PtCl₆²⁻-Ionen zu einer Ausfällung einer Platinschicht im Oberflächenbereich der Membran. Dieses Verfahren ist zeitlich durch die gegebenen Diffussionsgeschwindigkeiten der Reaktanten festgelegt. Darüber hinaus muß dieses Verfahren zweimal angewandt werden, um eine komplette (ME) herzustellen, da in einem Verfahrensschritt nur eine Seite der Membran beschichtet werden kann.

Im Hinblick auf die zukünftige Bedeutung aller Brennstoffzellen und insbesondere der PEM-Brennstoffzellen als Energiewandler der Zukunft, besteht also Bedarf an der Bereitstellung eines verbesserten Verfahrens zur automatisierten und kostengünstigen Herstellung des Kerns jeder PEM-Brennstoffzelle, nämlich der ME. Aufgabe der vorliegenden Erfindung ist es daher, ein Verfahren zur Verfügung zu stellen, bei dem in einem kontinuierlichen und automatisierbaren Prozeß ME für PEM-Brennstoffzellen hergestellt werden können.

Allgemeine Erkenntnis der Erfindung ist, daß durch simples Eintauchen des Elektrolyt-Membranbandes in eine Salzlösung des Elektrodenmaterials, eine ausreichend dicke Salzkruste oder ein Salzfilm (je nach Menge an verbliebenem Lösungsmittel) an dem Membranband haftet, daß nach erfolgter Reduktion das Elektrodenmaterial in gewünschter Eindringtiefe und Masse an dem Polymer anhaftet.

Gegenstand der vorliegenden Erfindung ist ein Verfahren zur kontinuierlichen Herstellungen von Membran-Elektrodeneinheiten für Polymerelektrolytmembran-(PEM)Brennstoffzellen, bei dem eine bandförmig durchlaufende Polymerelektrolytmembran
- in einem ersten Verfahrensschritt durch eine Lösung eines Salzes des Elektrodenmaterials so gezogen wird, daß an beiden Seiten der Membran das Salz in, zur Bildung der Elektroden ausreichender, Menge anhaftet und dann
- in einem zweiten Verfahrensschritt das Salz auf der Membran in Lösung oder im Gasstrom zum Elektrodenmaterial reduziert wird, und
- zwischen die zwei Verfahrensschritte noch ein Trocknungsschritt zum Entfernen des Lösungsmittels, das auf dem Membranband anhaftet, zwischengeschaltet wird.

Bei einer bevorzugten Ausführungsform wird der zweite Verfahrensschritt, also die Reduktion der anhaftenden Salze im Gasstrom und ggf. unter Temperaturerhöhung durchgeführt.

Vorteilhaft ist jedoch die Ausführungsform, bei der das Membranband einfach über Umlenkrollen durch zwei Bäder geleitet wird, zunächst durch eines, das das Salz enthält, und danach durch eines, das das Reduktionmittel enthält.

Als "Membranbänder" oder "Elektrolytbänder" oder "Polymermembranbänder" werden alle verarbeitbaren Bänder von protonenleitenden (oder auch hydroxidionenleitenden) Polymeren bezeichnet, die als Elektrolyten von PEM-Brennstoffzellen verwendbar sind. Beispielhaft genannt seien hier sulfonierte Polystyrolmembranen oder Nafion (registrierte Marke) das ein perfluoriertes Polymer ist.

Im erfindungsgemäßen Verfahren kann sowohl die glatte protonenleitende Elektrolytmembran als auch eine teilweise mit Trägermaterial oder Stromkollektoren wie beispielsweise Kohlepapier oder -gewebe versehene Membran verwendet werden. Bei letzterer ändert sich die Eintauchzeit der Membran gewaltig, weil das Trägermaterial sehr schnell mit der Salzlösung vollgesaugt ist.

Als "Elektrodenmaterial" oder "Elektrokatalysator" werden die für PEMFC üblichen Elektroden, insbesondere Edelmetalle, wie beispielsweise Platin oder Ruthenium, bezeichnet. Legierungselektroden können aus entsprechend gemischten Salzlösungen hergestellt werden.

Als "Lösung eines Salzes von Elektrodenmaterial" werden Salzlösungen der o.g. Substanzen und Verbindungen, also beisp. die Lösung eines Platinsalzes mit Pt⁴⁺-Ionen wie eine 2molare Lösung von Hexachloroplatinat in Wasser, bezeichnet. Es können natürlich auch Pt²⁺-Salze vorliegen oder beliebige Mischungen von Metallsalzen, wie beispielsweise zur Erzeugung der Pt/Ru-Katalysatoren für die Direkt-Methanol-Brennstoffzelle eine Mischung aus Pt²⁺-Salzen mit Ru³⁺-Salzen. Weder das hier beispielhaft genannte Salz, noch das genannte Metall oder Lösungsmittel sollen den Umfang der Erfindung beschränken.

Die in der Lösung herrschende Salzkonzentration ist selbstverständlich abhängig von der angestrebten Dicke oder Eindringtiefe der anhaftenden Salzkruste sowie der Fläche, die die Elektrode auf dem Elektrolytband einnehmen soll. Durch die Konzentration der Salzlösung läßt sich die Belegung der Membran mit dem Salz steuern.

Generell wird das Band durch die Salzlösung mit einer Geschwindigkeit > 0 durchgezogen, es ist jedoch auch möglich, daß das Band in der Salzlösung verweilt, d.h. daß der kontinuierliche und automatisierte Prozeß immer wieder Haltezeiten vorsieht. Über die Verweilzeit der Membran in dem Salzbad läßt sich die Eindringtiefe des Elektrodenmaterials in der Membran (Tiefenverteilung des Elektrokatalysators in dem Polymerelektrolyten) steuern.

Durch die geeignete Wahl der Reaktionsbedingungen (Salz, Reduktionsmittel, Lösungsmittel, Tixotropie, Viskosität, pH-Wert, Konzentrationen, Bad- und Aussentemperatur) und durch Zugabe von Additiven (beispielsweise Binder) lassen sich die Eigenschaften der hergestellten ME in einem weitem Bereich variieren. Diese Variation ist auch durch anschließende Nachbehandlung des belegten Elektrolyt-Polymerbandes wie Zulegen von Stromkollektoren (beispielsweise Kohlegewebe), Pressen, Imprägnieren, Tempern oder ähnliches, möglich.

Alle üblichen Reduktionsmittel, die das Membranmaterial und die hergestellte ME unbeschädigt lassen (speziell im Hinblick auf Vergiftungen), sich rückstandsfrei entfernen lassen und dabei das anhaftende Salz möglichst unter milden Bedingungen quantitativ reduzieren, sind für die Reduktion des auf der Membran anhaftenden Salzes geeignet. Beispiele sind etwa Wasserstoff oder Hydrazin.

Im folgenden wird die Erfindung anhand der beiden Figuren näher beschrieben. Die oben angegebenen Definitionen gelten nicht nur für die Beschreibung und Ansprüche, sondern auch für die in der Erläuterung zu den Figuren verwendeten Begriffe.
- Fig. 1: zeigt die bevorzugte Ausführungsform des Verfahrens, bei der die Belegung des Membranbandes mit Salz in einem Bad A und die Reduktion des anhaften den Salzes in einem weiteren Bad B erfolgt.
- Fig. 2: zeigt eine weitere bevorzugte Ausführungsform der Erfindung bei der das Membranband zunächst in einem Bad A mit Salz belegt wird und dann das Anhaftende Salz im Gasstrom reduziert wird.

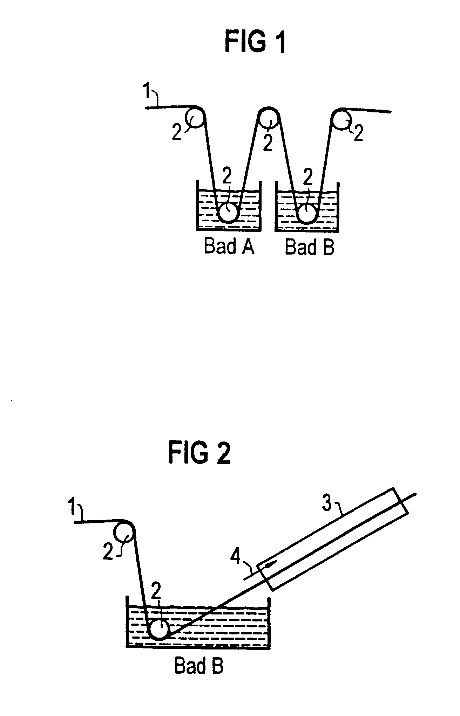

In Fig. 1 ist zunächst das bandförmig durchlaufende Polymerelektrolytmembranband 1 zu sehen. Über eine erste Umlenkrolle 2 gelangt das Membranband in das Bad A, in dem sich in einem inertem Lösungsmittel, bevorzugt Wasser oder ein anderes Lösungsmittel mit hoher Dielektrizitätskonstante, das Salz oder die Salzmischung befindet. Beim Durchlauf durch das Bad A wird die Membran beidseitig mit dem Salz aus der Lösung belegt und beim Austritt des Bandes 1 aus dem Bad A befindet sich auf beiden Seiten Bandes 1 ein Salzfilm oder eine Salzkruste. Das mit Salz belegte Band 1 wird über die nächste Umlenkrolle 2 in das Bad B geführt, in dem sich, ebenfalls in einem inerten Lösungsmittel, das Reduktionsmittel befindet. Dabei wird das auf dem Band 1 anhaftende Salz beim Durchlauf durch das Bad B reduziert. Über die letzte Umlenkrolle 2 am rechten äußeren Ende der Figur 1 gelangt das Band 1 als fertige ME in die weitere Verarbeitung, wie beispielsweise in eine Zerschneidemaschinerie. Hinterher kann die Elektrodenstruktur durch eine Presse, ggf. mit angeschlossener Wärmebehandlung, optimiert werden.

Fig. 2 zeigt ebenfalls ein bandförmig durchlaufendes Band von Polymerelektrolytmembran 1, das über Umlenkrollen 2 zunächst in das Bad A, das wie in Fig. 1 das Salz des Elektrodenmaterials in Lösung enthält, gelenkt. Beim Durchlauf durch das Bad A bildet sich auf dem Membranband eine Salzkruste aus, und nach dem Verlassen des Bades A wird das verkrustete Membranband durch ein Gefäß 3 mit reduzierender Atmosphäre, das ggf. über eine Heizvorrichtung verfügt, gezogen. Im Gefäß 3 mit reduzierender Atmosphäre kann über die Eintrittsöffnung 4 gasförmiges Reduktionsmittel zuströmen. Beim Austritt aus dem Gefäß 3 ist das Membranband wieder beidseitig mit Elektrodenmaterial beschichtet.

Bei der Ausführungsform, bei der die Reduktion der Salzkruste auf dem Membranband im Gasstrom erfolgt, ist von Vorteil, daß das Vermischen der Inhalte beider Bäder im Bad B vermieden wird. Dies kann jedoch nach der Ausgestaltung gemäß der Fig. 1 auch dadurch erreicht werden, daß zwischen dem Austritt aus dem Bad A und dem Eintritt des Membranbandes in das Bad B eine Trocknungsvorrichtung wie beispielsweise ein Ventilator oder Fön, der auf der Höhe der Umlenkrolle 2, die das Band von beiden Seiten trocknet und die Salzkruste von Lösungsmittel befreit, zwischengeschaltet wird.

Das erfindungsgemäße Verfahren zeichnet sich dadurch aus, daß in einem kontinuierlichen Prozeß gleichzeitig beide Seiten der Membran mit einer elektrochemisch aktiven Elektrodenschicht belegt werden können und somit eine ME in einem einzigen Prozeßschritt entsteht. Durch das Wegfallen diskontinuierlicher Arbeitsschritte sowie zeitbestimmender diffusionslimitierter Schritte lassen sich damit hohe Fertigungsgeschwindigkeiten bei geringen Kosten erzielen.

## Patentansprüche

1. Verfahren zur kontinuierlichen Herstellung von Membran-Elektrodeneinheiten (ME) für Polymer-Elektrolyt-Membran-(PEM) Brennstoffzellen, bei dem eine bandförmig durchlaufende Polymerelektrolytmembran (Membranband)
- in einem ersten Verfahrensschritt durch eine Lösung eines Salzes des Elektrodenmaterials so gezogen wird, daß an beiden Seiten der Membran das Salz in, zur Bildung der Elektroden ausreichender Menge anhaftet und
- in einem zweiten Verfahrensschritt das Salz auf der Membran reduziert wird
- wobei ein Trocknungsschritt zum Entfernen des Lösungsmittels auf dem Membranband zwischen die beiden Verfahrensschritte geschaltet wird.

## Claims

1. Process for the continuous production of membrane electrode units (ME) for polymer electrolyte membrane (PEM) fuel cells, in which a continuous strip of polymer electrolyte membrane (membrane strip)
- in a first process step, is pulled through a solution of a salt of the electrode material so that the salt adheres to both sides of the membrane in a sufficient quantity to form the electrodes, and
- in a second process step, the salt is reduced on the membrane,
- a drying step for removing the solvent on the membrane strip being interposed between the two process steps.

## Revendications

1. Procédé de fabrication en continu d'unités à membrane et électrodes (ME) pour piles à combustible à membrane électrolyte polymère (PEM), dans lequel une membrane électrolyte polymère continue en forme de bande (bande de membrane)
- est tirée, dans une première étape du procédé, à travers une solution d'un sel du matériau d'électrode, de telle manière que le sel adhère aux deux faces de la membrane en une quantité suffisante pour la formation des électrodes et
- dans une deuxième étape du procédé, le sel est réduit sur la membrane,
- une étape de séchage étant intercalée entre les deux étapes du procédé, pour éliminer le solvant sur la bande de membrane.
